# NEW EUROPEAN PATENT SPECIFICATION

(11) **EP 2 571 791 B2**
(45) Date of publication and mention of the opposition decision: **10.11.2021**
(45) Mention of the grant of the patent: 02.07.2014
(21) Application number: 10736821.9
(22) Date of filing: 21.05.2010
(51) Int. Cl.: B65G 21/20, B65G 47/68

(54) **METHOD AND LINE FOR CONVEYING CONTAINERS, IN PARTICULAR BOTTLES**
VERFAHREN UND LINIE ZUM FÖRDERN VON BEHÄLTERN, INSBESONDERE FLASCHEN.
PROCÉDÉ ET LIGNE POUR TRANSPORTER DES RÉCIPIENTS, EN PARTICULIER DES BOUTEILLES.

(43) Date of publication of application: 27.03.2013
(73) Proprietor: Gebo Packaging Solutions Italy SRL, Parma (IT)
(72) Inventor: GUIDI, Roberto, I-43100 Parma (IT)
(74) Representative: Novagraaf Technologies
(86) International application number: PCT/IT2010/000225
(87) International publication number: WO 2011/145123

(56) References cited:
- EP-A2- 0 962 406
- DE-A1- 10 017 739
- DE-U- 1 902 978
- DE-U1- 29 617 148
- US-A- 3 767 027
- US-A- 4 880 104
- US-A- 5 515 668
- US-A- 5 682 976
- US-B2- 7 207 428
- US-B2- 7 607 531

## Description

### TECHNICAL FIELD

The present invention relates to a line for conveying containers, in particular bottles.

The present invention may advantageously be applied to a casing machine for introducing bottles in the corresponding transportation cases, to which the following disclosure will explicitly refer without because of this loosing in generality.

### BACKGROUND ART

In the bottling sector, there is known to provide a casing machine comprising a conveying line, that has a belt conveyor defining a substantially horizontal resting plane for the bottles, and is provided with a plurality of parallel feeding channels, each of which is defined on the bottom by the belt conveyor, and is defined on the sides by two side walls arranged at a distance one from the other which is approximately the diameter of a bottle.

The conveying line extends between an inlet station adapted to receive bottles in a sequence and an outlet station, at which the bottles are stopped by a stop device and are transferred by a clamping head within corresponding transportation cases.

To equip the known casing machines of the above disclosed type as a function of the format of the bottles, two types of conveying lines are normally used.

According to a first type, the conveying line is provided with a plurality of a interchangeable feeding units, each of which comprises a support frame, and a plurality of side walls fixed on the support frame so as to define a plurality of feeding channels having a constant width other than the width of the feeding channels of the other feeding units.

The replacement of the above said feeding unit, required to equip the casing machine as a function of the format of the bottles, implies the presence of a stocking store of the feeding units and of a handling device to displace the feeding units between the casing machine and the stocking store, and is therefore relatively complicated and expensive.

According to the other one of the two above mentioned known types, each side wall is mobile transversally to a feeding direction of the bottles, and is coupled to each side wall adjacent thereto by means of a crank mechanism.

To equip the casing machine as a function of the format of the bottles, the side walls are displaced by corresponding crank mechanisms by respective laws of motion identical to one another so as to selectively control the width of each feeding channel.

Due to the simultaneous displacement of all of the side walls, the belt conveyor, that has a size such as to close the widest feeding channels on the bottom, has relatively high transversal dimensions, while the clamping head must have clamping organs which are mobile transversally to the above said bottle feeding direction as a function of the width of the feeding channels, and is therefore relatively complicated and expensive.

Furthermore the two known conveying lines of the above disclosed type have in both cases a relatively reduced flexibility as the side walls are distributed transversally to the feeding direction of the bottles with the same distribution pitch every time. A line for conveying containers is known from the document DE 296 17-148 U1.

### DISCLOSURE OF INVENTION

It is the object of the present invention to provide a line for conveying containers, in particular bottles, which does not have the above-described drawbacks and which is simple and cost-effective to implement.

According to the present invention, there is provided a line for conveying containers, in particular bottles, as claimed in claims 1 to 5.

The present invention also relates to a casing machine.

According to the present invention a casing machine is provided according to claim 6.

The present invention finally relates to a method for conveying containers, in particular bottles.

According to the present invention, there is provided a method for conveying containers, in particular bottles, as claimed in claims 7 to 8.

### BRIEF DESCRIPTION OF THE DRAWINGS

The present invention will now be described with reference to the accompanying drawings, which show a non-limitative embodiment thereof, in which:
figure 1 is a diagrammatic plan view, with parts removed for clarity, of a preferred embodiment of the casing machine of the present invention;
figure 2 is a diagrammatic side view, with parts removed for clarity, of the casing machine in figure 1;
figure 3 is a diagrammatic side view, with parts in section and parts removed for clarity, of a first detail of the casing machine of figures 1 and 2 shown in two different operative positions;
figure 4 is a diagrammatic plan view, with parts removed for clarity, of the detail in figure 3;
figure 5 is a diagrammatic side view, with parts in section and parts removed for clarity, of a variant of the detail in figure 3 shown in two different operative positions;
figure 6 is a diagrammatic plan view, with parts removed for clarity, of the variant in figure 5; and
figure 7 is a diagrammatic side view, with parts removed for clarity, of the second detail of the casing machine of figures 1 and 2.

### BEST MODE FOR CARRYING OUT THE INVENTION

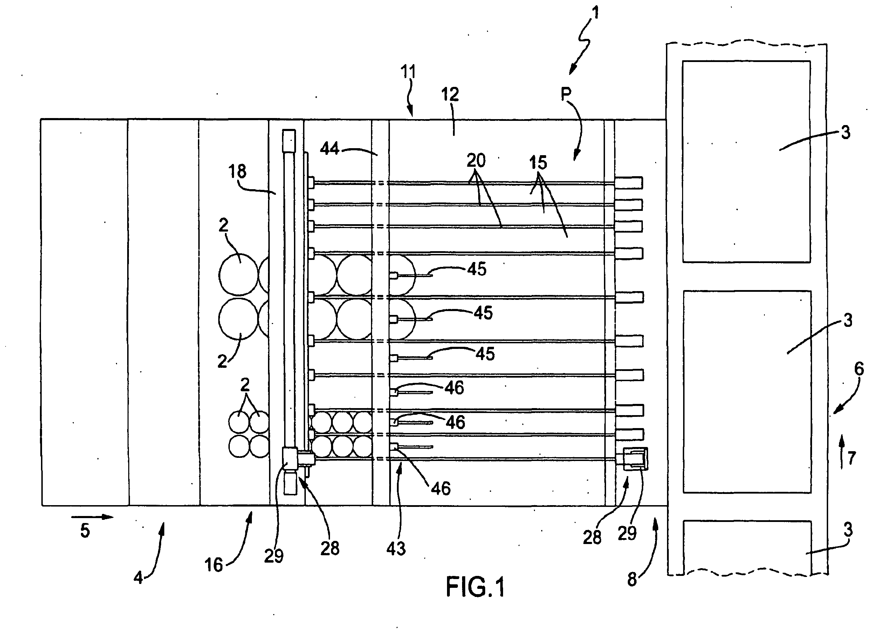

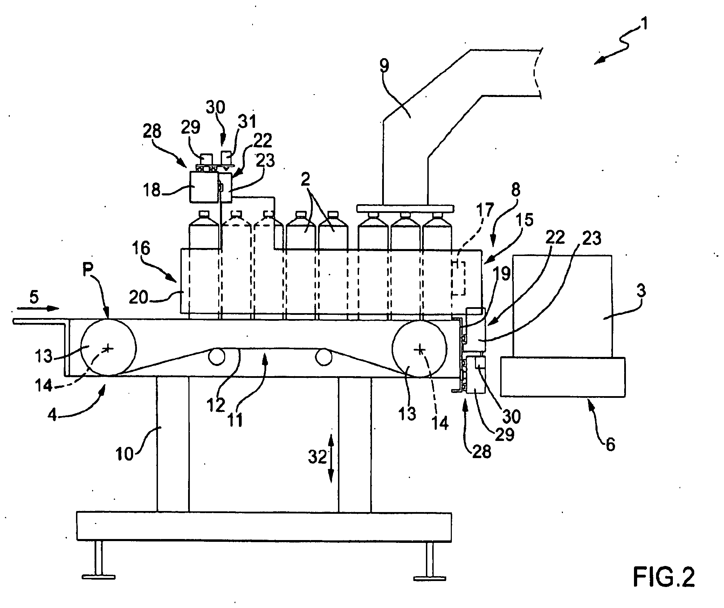

With reference to figures 1 and 2, numerals 1 indicates, as a whole, a casing machine for introducing containers, in this case bottles 2, in corresponding transportation cases 3.

Machine 1 comprises a first conveying line 4 adapted to feed bottles 2 in a horizontal direction 5; a second conveying line 6 adapted to intermittently feed cases 3 in a horizontal direction 7 transversal to direction 5; and a transfer station 8, at which bottles 2 are withdrawn from line 4 and transferred in corresponding cases 3 by means of a clamping head 9 of the known type.

Line 4 comprises a support frame 10, and a belt conveyor 11 comprising in turn a belt 12, which has a top transportation branch defining a substantially horizontal resting plane P for bottles 2, and is wound like a ring about a plurality of pulleys 13 mounted on frame 10 to rotate, with respect to frame 10 and under the thrust of a known actuating device (not shown), about respective rotation axes 14 parallel to one another and to direction 7.

Bottles 2 are fed by line 4 along corresponding feeding channels 15, which are side by side and parallel to one another, are defined on the bottom by belt 12, extend in direction 5 between an inlet station 16 adapted to receive in a sequence bottles 2 and station 8, and cooperate with a stop plate 17 mounted at station 8 to stop bottles 2 in direction 5.

Line 4 also comprises a top cross bar 18, which extends in direction 7 and above plane P, is fixed to frame 10 at station 16, and is arranged at a distance from plane P which approximates by excess the maximum height of bottle 2, and a bottom cross bar 19, which extends in direction 7, and is fixed to a front end of frame 10 at station 8.

Each channel 15 -is defined by two side walls 20 parallel to one another, each of which extends in direction 5 and in a substantially vertical containing plane, is slidingly coupled to cross bars 18 and 19 to be displaced, with respect to frame 10, rectilinearly in direction 7, and is locked on cross bars 18 and 19 in direction 7 by means of respective locking devices 21.

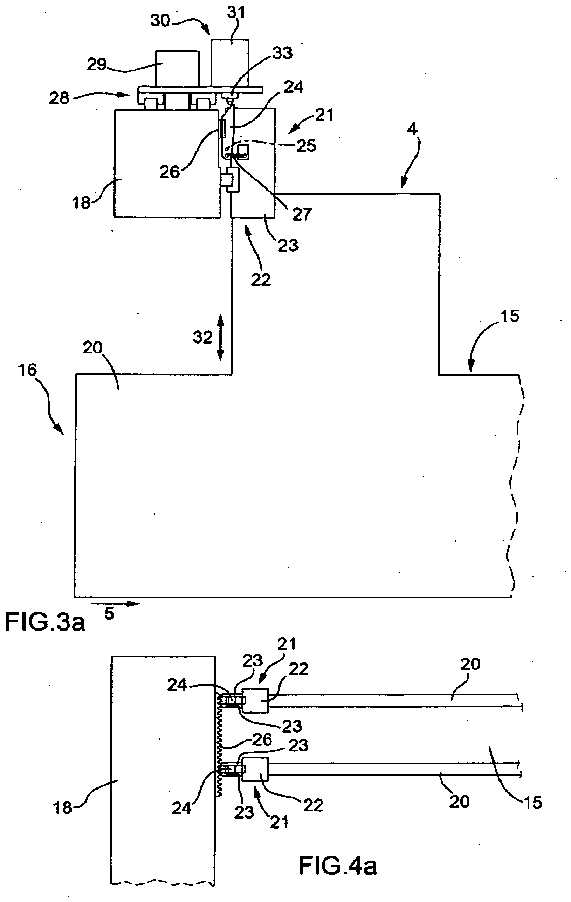

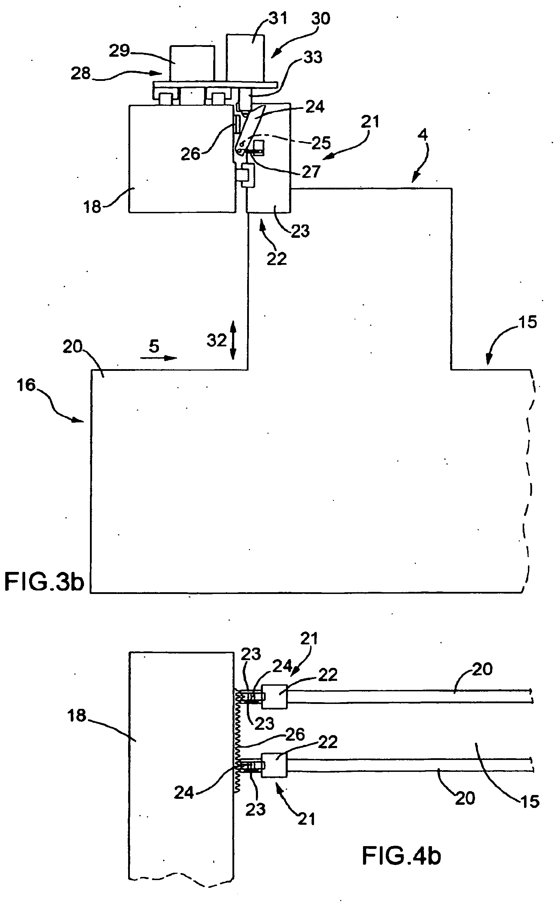

According to figures 3 and 4, each device 21 comprises a support bracket 22, which projects vertically from wall 20, and is defined by two plates 23 parallel to one another and orthogonal to direction 7; and a rocker arm 24, which extends between the two plates 23, and is hinged to bracket 22 to oscillate, with respect to bracket 22, about a fulcrum axis 25 parallel to direction 7.

Rocker arm 24 is displaced, and normally maintained, in a locked position (figures 3a and 4a), in which a first arm of the rocker arm 24 engages a rack 26 fixed to the corresponding cross bar 18, 19 parallelly to direction 7, by a spring 27 interposed between bracket 22 and a second arm of rocker arm 24.

Walls 20 are displaced along cross bars 18, 19 by a drawing device 28 comprising, for each cross bar 18, 19, a respective motorised slide 29, which is mobile along the corresponding cross bar 18, 19 in direction 7, and is provided with a device 30 for hooking to a wall 20.

Obviously, according to alternative embodiments (not shown), the number of slides 29 mounted on each cross bar 18, 19 may be other than one.

Device 30 comprises an actuating cylinder 31, which is mounted on slide 29, extends in a vertical direction 32 orthogonal to directions 5 and 7, and has an outlet rod 33 mobile between a retracted position (figure 3a), in which cylinder 31 does not interfere with walls 20 and corresponding devices 21, and an extracted position (figure 3b), in which rod 33 is arranged between plates 23 of a wall 20 so as to hook wall 20 and, at the same time, displace the corresponding rocker arm 24 against the action of corresponding spring 27 from its locked position to an unhooked position (figures 3b and 4b), in which rocker arm 24 disengages corresponding rack 26.

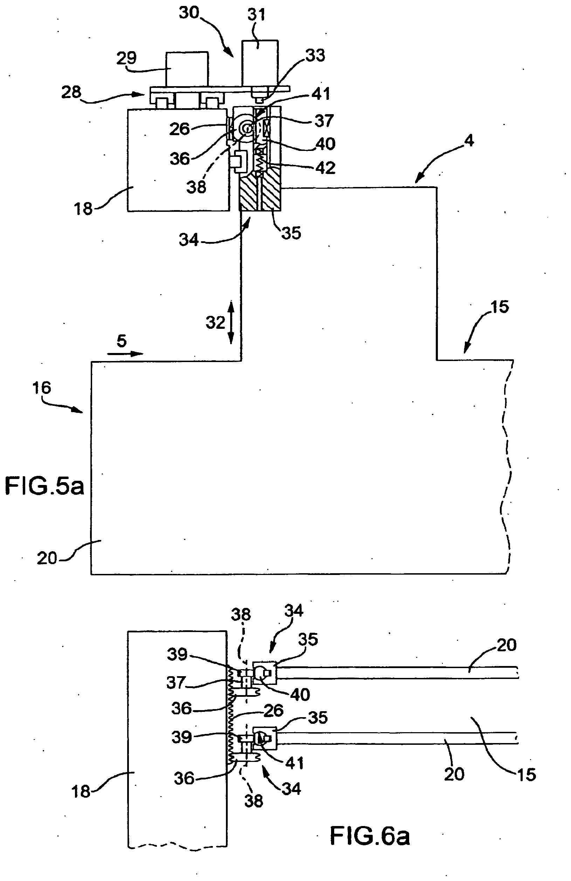

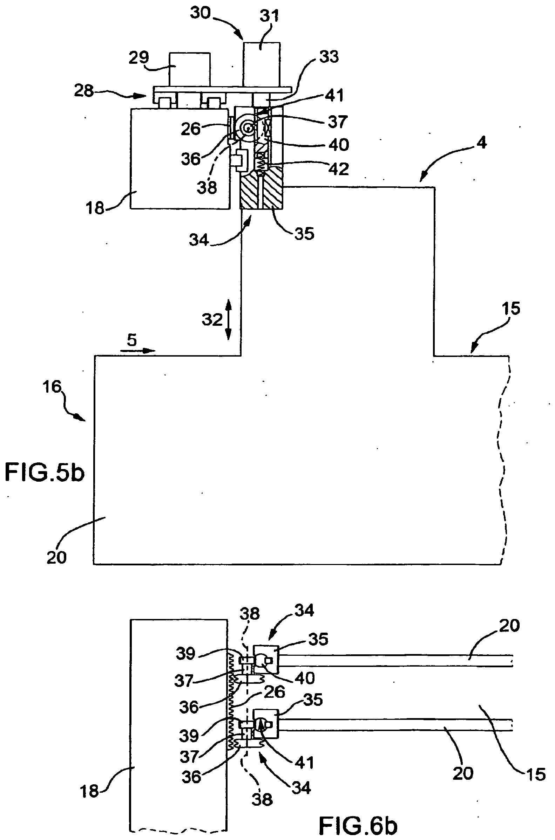

The variant shown in figures 5 and 6 differs from what is shown in the previous figures only in that, therein, each device 21 is eliminated and replaced by a locking device 34 comprising a support bracket 35 vertically projecting from wall 20; an eccentric toothed wheel 36 mounted on a support shaft 37 rotatably coupled to bracket 35 to rotate, with respect to bracket 35, about a rotation axis 38 parallel to direction 7; a reel 39 coupled to shaft 37; and a toothed actuating pin 40, which is coupled with reel 39, and is slidingly engaged within a hole 41 obtained in bracket 35 parallelly to direction 32.

Pin 40 is displaced, and normally maintained, in a lifted position (figure 5a), in which shaft 37 rotates about axis 38 (anticlockwise in Figure 5a) to engage wheel 36 in corresponding rack 26, by a spring 42 interposed between bracket 35 and pin 40.

Upon displacement of rod 33 of cylinder 31 in its extracted position, rod 33 engages hole 41 so as to hook to wall 20, displace pin 40 downwards against the action of spring 42, rotate shaft 37 about axis 38 (clockwise in figure 5b), and disengage wheel 36 from corresponding rack 26.

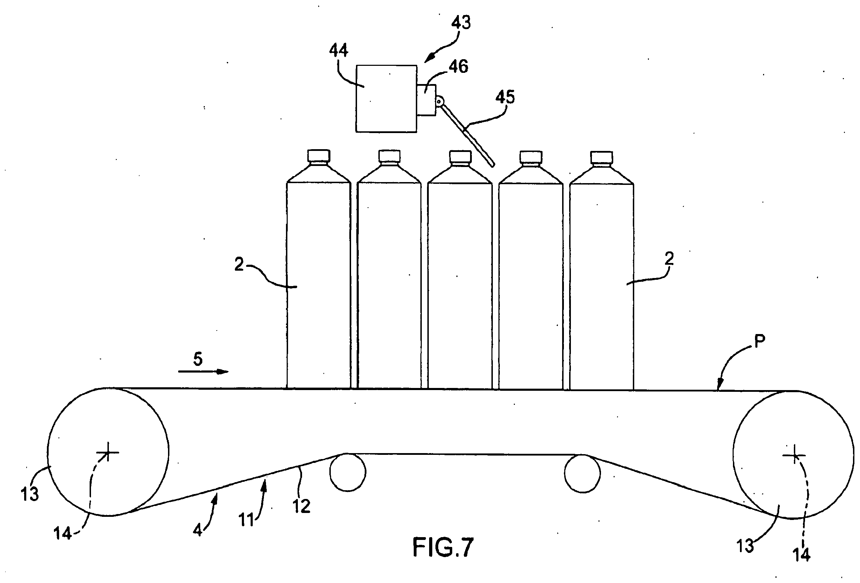

With reference to figure 7, line 4 is also provided with a tracer device 43 adapted to detect the presence and the correct feeding of bottles 2 within the corresponding channels 15 and comprising a cross bar 44, which extends in direction 7 and above plane P, is fixed to frame 10 downstream of station 16 in direction 5, and is arranged at a distance from plane P which approximates by excess the maximum height of a bottle 2.

Device 43 also comprises, for each channel 15, a respective tracer member 45, which extends above plane P, and is hinged to a feeding slide 46, which is mobile along cross bar 44 in direction 7 under the thrust of a drawing device (not shown) similar to drawing device 28, and is selectively locked on cross bar 44 and on drawing device (not shown) by means of corresponding locking and hooking devices (not shown) similar to locking devices 21, 34 and to hooking device 30.

The operation of conveying line 4 may be easily understood from the description above and does not require further explanations.

From the above, there follows that side walls 20 of feeding channels 15 are selectively displaced along cross bars 18, 19 in direction 7 independently of one another and by respective independent laws of motion, therefore allowing to equip conveying line 4 with channels 15 which have different widths, to stack walls 20 of channels 15 which from time to time are not used, and to considerably reduce the dimensions of line 4 in direction 7.

## Claims

1. A line for conveying containers (2), in particular bottles, the line comprising a feeding unit (11) defining a resting plane (P) for the containers (2); and a plurality of feeding channels (15) which are side by side and parallel to one another, each of which extends on the resting plane (P) in a first determined direction (5), and is defined on the sides by two side walls (20) parallel to the first direction (5), at least one of the side walls (20) of each feeding channel (15) being a mobile wall (20) mounted to be displaced in a second direction (7) substantially transversal to the first direction (5) as a function of the format of the containers (2); actuating means (28) to selectively displace the mobile walls (20) in the second direction (7) by respective laws of motion independent of one another; a guide device (18, 19) slidingly engaged by the mobile walls (20); actuating means (28) comprising at least one motorised drawing device (28) mobile in the second direction (7) to displace the mobile walls (20) along the guide device (18, 19) in the second direction (7); and being **characterised by** also comprising locking means (21, 30, 34) which comprise, for each mobile wall (20), at least one respective first locking member (24; 36) mobile between a locked position of the mobile wall (20) on the guide device (18, 19) and an unhooked position, and, for each drawing device (28), a respective second locking member (33) mobile between a hooked position of a mobile wall (20) and a released position, to selectively lock each mobile wall (20) on the guide device (18, 19) and on the drawing device (28).

2. The line according to claim 1, wherein the locking means (21, 30, 34) also comprise, for each mobile wall (20), respective thrust means (27; 42) to displace, and normally maintain, the corresponding first locking member (24; 36) in its locked position; the first locking member (24; 36) being mobile from its locked position to its unhooked position upon displacement of a said second locking member (33) from its released position to its hooked position.

3. The line according to claim 2, wherein the locking means (21, 30) comprise at least one rack (26) parallel to the second direction (7); a rocker arm (24) mounted on each mobile wall (20) to rotate about a fulcrum axis (25) parallel to the second direction (7), and a spring (27) to displace, and normally maintain, the cocker arm (24) in a locked position, in which the rocker arm (24) engages the rack (26); and an actuating cylinder (31) mounted on each drawing device (28) and provided with an outlet rod (33) mobile from and towards a hooked position, in which the outlet rod (33) extends through a mobile wall (20) to disengage the corresponding rocker arm (24) from the rack (26) and, at the same time, lock the mobile wall (20) on the drawing device (28).

4. The line according to claim 2, wherein the locking means (30, 34) comprise at least one rack (26) parallel to the second direction (7); an eccentric toothed wheel (36) mounted on each mobile wall (20) to rotate about a rotation axis (38) parallel to the second direction (7); a spring (42) to displace, and normally maintain, the eccentric toothed wheel (36) in a locked position, in which the eccentric toothed wheel (36) engages the rack (26); and an actuating cylinder (31) mounted on each drawing device (28) and provided with an outlet rod (33) mobile from and towards a hooked position, in which the outlet rod (33) extends through a mobile wall (20) to disengage the corresponding eccentric toothed wheel (36) from the rack (26) and, at the same time, lock the mobile wall (20) on the drawing device (28).

5. The line according to any of the preceding claims, also comprising, for each feeding channel (15), a respective tracer member (45) adapted to detect the presence of the containers (2) in the feeding channel (15) and mobile in the second direction (7) as a function of the format of the containers (2); further actuating means being provided to selectively displace the tracer members (45) in the second direction (7) by respective independent laws of motion.

6. A casing machine comprising a first line (4) for conveying a sequence of containers (2); a second line (6) for conveying a sequence of transportation cases (3); a connection station (8) of the first line (4) with the second line (6); and a clamping unit (9) to transfer the containers (2) from a first line (4) within corresponding transportation cases (3); and **characterised in that** the first line (4) is made according to claims 1 to 5.

7. A method for conveying containers (2), in particular bottles, in a conveying line (4), which defines a resting plane (P) for the containers (2), and has a plurality of feeding channels (15) which are side by side and parallel to one another, each of which extends in a first determined direction (5), and is defined on the sides by two side walls (20), at least one of which is a mobile wall (20) mounted to be displaced in a second direction (7) substantially transversal to the first direction (5) as a function of the format of the containers (2); the method comprising the step of:
- selectively displacing the mobile walls (20) in the second direction (7) by respective laws of motion independent of one another;
- displacing the mobile walls (20) along a guide device (18, 19) by means of at least one drawing device (28);
the method being **characterized by** further comprising the step of
- selectively locking each mobile wall (20) along the guide device (18, 19) and on the drawing device (28);
- locking each mobile wall (20) along the guide device (18, 19) by means of a first locking member (24; 36) mounted on the mobile wall (20);
- locking each mobile wall (20) on the drawing device (28) by means of a second locking member (33) mounted on the drawing device (28); and
- unhooking the first locking member (24; 36) from the guide device (18, 19) by said second locking member (33).

8. The method according to claim 7, wherein the conveying line (4) further comprises, for each feeding channel (15), a respective tracer member (45) adapted to detect the presence of the containers (2) in the feeding channel (15) and mobile in the second direction (7) as a function of the format of the containers (2); the method comprising the step of:
- selectively displacing the tracer members (45) in the second direction (7) by respective laws of motion independent of one another.

## Patentansprüche

1. Anlage zum Fördern von Behältern (2), insbesondere von Flaschen, wobei die Anlage eine Zuführeinheit (11), die eine Auflageebene (P) für die Behälter (2) definiert und eine Vielzahl von nebeneinander und parallel zueinander angeordneten Zuführkanälen (15), von denen sich jeder auf der Ruheebene (P) in einer ersten bestimmten Richtung (5) erstreckt und an den Seiten durch zwei zur ersten Richtung (5) parallele Seitenwände (20) begrenzt ist, wobei mindestens eine der Seitenwände (20) jedes Zuführkanals (15) eine bewegliche Wand (20) ist, die in Abhängigkeit vom Format der Behälter (2) in einer zweiten Richtung (7) im Wesentlichen quer zur ersten Richtung (5) verschiebbar ist; Betätigungsmittel (28) zum selektiven Verschieben der beweglichen Wände (20) in der zweiten Richtung (7) durch entsprechende, voneinander unabhängige Bewegungsgesetze; eine Führungsvorrichtung (18, 19), in die die beweglichen Wände (20) gleitend eingreifen; Betätigungsmittel (28), die mindestens eine motorisierte Zugvorrichtung (28) umfassen, die in der zweiten Richtung (7) beweglich ist, um die beweglichen Wände (20) entlang der Führungsvorrichtung (18, 19) in der zweiten Richtung (7) zu verschieben; und die **dadurch gekennzeichnet sind, dass** sie auch Verriegelungsmittel (21, 30, 34) umfassen, die für jede bewegliche Wand (20) mindestens ein jeweiliges erstes Verriegelungselement (24; 36) umfassen, das zwischen einer verriegelten Position der beweglichen Wand (20) an der Führungsvorrichtung (18, 19) und einer ausgehakten Position beweglich ist, und für jede Zugvorrichtung (28) ein jeweiliges zweites Verriegelungselement (33) umfassen, das zwischen einer eingehakten Position einer beweglichen Wand (20) und einer ausgehakten Position beweglich ist, um jede bewegliche Wand (20) an der Führungsvorrichtung (18, 19) und an der Zugvorrichtung (28) selektiv zu verriegeln.

2. Anlage nach Anspruch 1, bei der die Verriegelungsmittel (21, 30, 34) auch für jede bewegliche Wand (20) entsprechende Schubmittel (27; 42) umfassen, um das entsprechende erste Verriegelungselement (24; 36) in seine verriegelte Position zu verschieben und normalerweise dort zu halten; wobei das erste Verriegelungselement (24; 36) aus seiner verriegelten Position in seine ausgehakte Position beweglich ist, wenn ein zweites Verriegelungselement (33) aus seiner freigegebenen Position in seine eingehakte Position verschoben wird.

3. Anlage nach Anspruch 2, bei der die Verriegelungsmittel (21, 30) mindestens eine parallel zur zweiten Richtung (7) verlaufende Zahnstange (26), einen an jeder beweglichen Wand (20) angebrachten Kipphebel (24), der sich um eine parallel zur zweiten Richtung (7) verlaufende Drehachse (25) dreht, und eine Feder (27), die den Kipphebel (24) in eine verriegelte Stellung verschiebt und normalerweise in dieser hält, in der der Kipphebel (24) mit der Zahnstange (26) in Eingriff steht, umfassen und einen Betätigungszylinder (31), der an jeder Ziehvorrichtung (28) angebracht ist und mit einer Auslassstange (33) versehen ist, die von und zu einer eingehakten Position beweglich ist, wobei sich die Auslassstange (33) durch eine bewegliche Wand (20) erstreckt, um den entsprechenden Kipphebel (24) von der Zahnstange (26) zu lösen und gleichzeitig die bewegliche Wand (20) an der Ziehvorrichtung (28) zu verriegeln.

4. Anlage nach Anspruch 2, wobei die Verriegelungsmittel (30, 34) mindestens eine parallel zur zweiten Richtung (7) verlaufende Zahnstange (26), ein an jeder beweglichen Wand (20) angebrachtes Exzenterzahnrad (36), das sich um eine parallel zur zweiten Richtung (7) verlaufende Drehachse (38) dreht, eine Feder (42), um das Exzenterzahnrad (36) in eine verriegelte Position zu verschieben und normalerweise dort zu halten, in der das Exzenterzahnrad (36) mit der Zahnstange (26) in Eingriff steht und einen Betätigungszylinder (31), der an jeder Ziehvorrichtung (28) angebracht und mit einer Auslassstange (33) versehen ist, die aus einer und in Richtung einer eingehakten Position beweglich ist, wobei sich die Auslassstange (33) durch eine bewegliche Wand (20) erstreckt, um das entsprechende Exzenterzahnrad (36) von der Zahnstange (26) zu lösen und gleichzeitig die bewegliche Wand (20) an der Ziehvorrichtung (28) zu verriegeln.

5. Anlage nach einem der vorhergehenden Ansprüche, die außerdem für jeden Zuführkanal (15) ein entsprechendes Tasterteil (45) aufweist, das geeignet ist, das Vorhandensein der Behälter (2) in dem Zuführkanal (15) zu erfassen, und das in Abhängigkeit von dem Format der Behälter (2) in der zweiten Richtung (7) beweglich ist; wobei ferner Betätigungsmittel vorgesehen sind, um die Tasterteile (45) durch entsprechende unabhängige Bewegungsgesetze selektiv in der zweiten Richtung (7) zu verschieben.

6. Verpackungsmaschine mit einer ersten Linie (4) zum Fördern einer Folge von Behältern (2); einer zweiten Linie (6) zum Fördern einer Folge von Transportkisten (3); einer Verbindungsstation (8) der ersten Linie (4) mit der zweiten Linie (6); und einer Klemmeinheit (9) zum Überführen der Behälter (2) von einer ersten Linie (4) in entsprechende Transportkisten (3); und **dadurch gekennzeichnet, dass** die erste Linie (4) nach einem der Ansprüche 1 bis 5 hergestellt ist.

7. Verfahren zum Fördern von Behältern (2), insbesondere Flaschen, in einer Förderstrecke (4), die eine Auflageebene (P) für die Behälter (2) definiert und eine Vielzahl von nebeneinander und parallel zueinander angeordneten Zuführkanälen (15) aufweist, die sich jeweils in einer ersten bestimmten Richtung (5) erstrecken und an den Seiten durch zwei Seitenwände (20) begrenzt ist, von denen mindestens eine bewegliche Wand (20) ist, die in Abhängigkeit vom Format der Behälter (2) in einer zweiten Richtung (7) im Wesentlichen quer zur ersten Richtung (5) verschiebbar ist; wobei das Verfahren die folgenden Schritte umfasst:
- selektives Verschieben der beweglichen Wände (20) in der zweiten Richtung (7) durch entsprechende, voneinander unabhängige Bewegungsgesetze.
- Verschieben der beweglichen Wände (20) entlang einer Führungsvorrichtung (18, 19) mittels mindestens einer Zugvorrichtung (28);
wobei das Verfahren **dadurch gekennzeichnet ist, dass** es ferner den folgenden Schritt umfasst
- selektives Verriegeln jeder beweglichen Wand (20) entlang der Führungsvorrichtung (18, 19) und an der Ziehvorrichtung (28);
- Verriegeln jeder beweglichen Wand (20) entlang der Führungsvorrichtung (18, 19) mit Hilfe eines ersten Verriegelungselements (24; 36), das an der beweglichen Wand (20) angebracht ist;
- Verriegeln jeder beweglichen Wand (20) an der Zugvorrichtung (28) mittels eines zweiten Verriegelungselements (33), das an der Zugvorrichtung (28) angebracht ist; und
- Aushaken des ersten Verriegelungselements (24; 36) von der Führungsvorrichtung (18, 19) durch das zweite Verriegelungselement (33).

8. Verfahren nach Anspruch 7, wobei die Förderlinie (4) ferner für jeden Zuführkanal (15) ein jeweiliges Tasterteil (45) aufweist, das dazu geeignet ist, das Vorhandensein der Behälter (2) in dem Zuführkanal (15) zu erfassen und das in der zweiten Richtung (7) als eine Funktion des Formats der Behälter (2) beweglich ist; wobei das Verfahren den Schritt aufweist:
- Selektives Verschieben der Tastorgane (45) in der zweiten Richtung (7) durch entsprechende, voneinander unabhängige Bewegungsgesetze.

## Revendications

1. Ligne pour transporter des récipients (2), en particulier des bouteilles, la ligne comprenant une unité d'alimentation (11) définissant un plan de repos (P) pour les récipients (2) ; et une pluralité de canaux d'alimentation (15) qui sont côte à côte et parallèles les uns aux autres, dont chacun s'étend sur le plan de repos (P) selon une première direction déterminée (5), et est défini sur les côtés par deux parois latérales (20) parallèles à la première direction (5), l'une au moins des parois latérales (20) de chaque canal d'alimentation (15) étant une paroi mobile (20) montée pour être déplacée selon une seconde direction (7) sensiblement transversale à la première direction (5) en fonction du format des récipients (2) ; des moyens d'actionnement (28) pour déplacer de manière sélective les parois mobiles (20) dans la seconde direction (7) par des lois de mouvement respectives indépendantes les unes des autres ; un dispositif de guidage (18, 19) engagé par coulissement par les parois mobiles (20) ; des moyens d'actionnement (28) comprenant au moins un dispositif de traction motorisé (28) mobile dans la seconde direction (7) pour déplacer les parois mobiles (20) le long du dispositif de guidage (18, 19) dans la seconde direction (7) ; et étant **caractérisé en ce qu'**elle comprend également des moyens de verrouillage (21, 30, 34) qui comprennent, pour chaque paroi mobile (20), au moins un premier élément de verrouillage respectif (24 ; 36) mobile entre une position verrouillée de la paroi mobile (20) sur le dispositif de guidage (18, 19) et une position décrochée, et, pour chaque dispositif de traction (28), un second élément de verrouillage respectif (33) mobile entre une position accrochée d'une paroi mobile (20) et une position libérée, pour verrouiller sélectivement chaque paroi mobile (20) sur le dispositif de guidage (18, 19) et sur le dispositif de traction (28).

2. Ligne selon la revendication 1, dans laquelle les moyens de verrouillage (21, 30, 34) comprennent aussi, pour chaque paroi mobile (20), des moyens de poussée respectifs (27 ; 42) pour déplacer, et maintenir normalement le premier élément de verrouillage correspondant (24 ; 36) dans sa position verrouillée ; le premier élément de verrouillage (24 ; 36) étant mobile de sa position verrouillée à sa position décrochée suite au déplacement d'un dit second élément de verrouillage (33) de sa position libérée à sa position accrochée.

3. Ligne selon la revendication 2, dans laquelle les moyens de verrouillage (21, 30) comprennent au moins une crémaillère (26) parallèle à la seconde direction (7) ; un levier à genouillère (24) monté sur chaque paroi mobile (20) pour tourner autour d'un axe d'articulation (25) parallèle à la seconde direction (7) et un ressort (27) pour déplacer et maintenir normalement le levier à genouillère (24) dans une position verrouillée, dans laquelle le levier à genouillère (24) engage la crémaillère (26) ; et un cylindre d'actionnement (31) monté sur chaque dispositif de traction (28) et doté d'une tige de sortie (33) mobile depuis et vers une position accrochée, dans laquelle la tige de sortie (33) s'étend au travers d'une paroi mobile (20) pour désengager le levier à genouillère correspondant (24) de la crémaillère (26) et en même temps verrouiller la paroi mobile (20) sur le dispositif de traction (28).

4. Ligne selon la revendication 2, dans laquelle les moyens de verrouillage (30, 34) comprennent au moins une crémaillère (26) parallèle à la seconde direction (7) ; une roue dentée excentrique (36) montée sur chaque paroi mobile (20) pour tourner autour d'un axe de rotation (38) parallèle à la seconde direction (7) ; un ressort (42) pour déplacer et maintenir normalement la roue dentée excentrique (36) dans une position verrouillée, dans laquelle la roue dentée excentrique (36) engage la crémaillère (26) ; et un cylindre d'actionnement (31) monté sur chaque dispositif de traction (28) et doté d'une tige de sortie (33) mobile depuis et vers une position accrochée, dans laquelle la tige de sortie (33) s'étend au travers d'une paroi mobile (20) pour désengager la roue dentée excentrique (36) correspondante de la crémaillère (26) et en même temps verrouiller la paroi mobile (20) sur le dispositif de traction (28).

5. Ligne selon l'une quelconque des revendications précédentes, comprenant aussi pour chaque canal d'alimentation (15), un élément détecteur respectif (45) adapté pour détecter la présence des récipients (2) dans le canal d'alimentation (15) et mobile dans la seconde direction (7) en fonction du format des récipients (2) ; d'autres moyens d'actionnement étant prévus pour déplacer de manière sélective les éléments détecteurs (45) dans la seconde direction (7) par des lois de mouvement indépendantes respectives.

6. Machine de mise en caisse comprenant une première ligne (4) pour transporter une séquence de récipients (2) ; une seconde ligne (6) pour transporter une séquence de caisses de transport (3) ; un poste de liaison (8) de la première ligne (4) avec la seconde ligne (6) ; et une unité de serrage (9) pour transférer les récipients (2) d'une première ligne (4) dans des caisses de transport correspondantes (3) ; et **caractérisée en ce que** la première ligne (4) est établie selon les revendications 1 à 5.

7. Procédé de transport des récipients (2), en particulier des bouteilles, dans une ligne de transport (4) qui définit un plan de repos (P) pour les récipients (2) et présente une pluralité de canaux d'alimentation (15) qui sont côte à côte et parallèles les uns aux autres, dont chacun s'étend dans une première direction déterminée (5), et est défini sur les côtés par deux parois latérales (20), dont au moins une est une paroi mobile (20) montée pour être déplacée dans une seconde direction (7) sensiblement transversale à la première direction (5) en fonction du format des récipients (2) ; le procédé comprenant l'étape consistant à :
- déplacer de manière sélective les parois mobiles (20) dans la seconde direction (7) par des lois de mouvement respectives indépendantes l'une de l'autre ;
- déplacer les parois mobiles (20) le long d'un dispositif de guidage (18, 19) à l'aide d'au moins un dispositif de traction (28) ;
le procédé étant **caractérisé en ce qu'**il comprend en outre l'étape consistant à
- verrouiller sélectivement chaque paroi mobile (20) le long du dispositif de guidage (18, 19) et sur le dispositif de traction (28) ;
- verrouiller chaque paroi mobile (20) le long du dispositif de guidage (18, 19) au moyen d'un premier élément de verrouillage (24 ; 36) monté sur la paroi mobile (20) ;
- verrouiller chaque paroi mobile (20) sur le dispositif de traction (28) au moyen d'un deuxième élément de verrouillage (33) monté sur le dispositif de traction (28) ; et décrocher le premier élément de verrouillage (24 ; 36) du dispositif de guidage (18, 19) par ledit second élément de verrouillage (33).

8. Procédé selon la revendication 7, dans lequel la ligne de transport (4) comprend en outre pour chaque canal d'alimentation (15), un élément détecteur respectif (45) adapté pour détecter la présence des récipients (2) dans le canal d'alimentation (15) et mobile dans la seconde direction (7) en fonction du format des récipients (2) ; le procédé comprenant l'étape suivante :
- déplacer de manière sélective les éléments détecteurs (45) dans la seconde direction (7) par des lois de mouvement respectives indépendantes les unes des autres.
